# EUROPEAN PATENT SPECIFICATION

(11) **EP 3 317 132 B1**
(45) Date of publication and mention of the grant of the patent: **27.01.2021**
(21) Application number: 16724086.0
(22) Date of filing: 23.05.2016
(51) Int. Cl.: B60H 1/00

(54) **MODULE FOR HEATING, VENTILATION AND/OR AIR CONDITIONING OF A PASSENGER COMPARTMENT OF A MOTOR VEHICLE**
MODUL FÜR HEIZUNG, LÜFTUNG UND/ODER KLIMATISIERUNG EINES FAHRGASTRAUM EINES KRAFTFAHRZEUGS
MODULE DE CHAUFFAGE, VENTILATION ET/OU CLIMATISATION D'UN HABITACLE D'UN VÉHICULE AUTOMOBILE

(30) Priority: 27.05.2015 DE 102015108316
(43) Date of publication of application: 09.05.2018
(73) Proprietor: Valeo Klimasysteme GmbH, 96476 Bad Rodach (DE)
(72) Inventor: LÜER, Armin, 96476 Bad Rodach (DE); HROMADKA, Tomas, 96476 Bad Rodach (DE); STRATHENKE, Oliver, 96476 Bad Rodach (DE)
(74) Representative: Tran, Chi-Hai
(86) International application number: PCT/EP2016/061613
(87) International publication number: WO 2016/188969

(56) References cited:
- EP-A1- 1 348 581
- EP-A1- 1 522 448
- WO-A1-2016/152158
- JP-A- H09 156 348
- US-A1- 2014 199 933

## Description

The invention relates to a module for heating, ventilation and/or air conditioning of a passenger compartment of a motor vehicle, comprising a module housing, at least two channels being formed therein, and an adjustment mechanism, in particular for controlling airflows in the channels, wherein the adjustment mechanism comprises at least two flaps arranged on a common shaft as well as a drive, the shaft being able to be adjusted thereby between a closed position in which each flap closes a channel and at least one open position in which each flap at least partially opens a channel.

In such modules for heating, ventilation and/or air conditioning of the passenger compartment of a vehicle (heating, ventilation and air conditioning device, HVAC) it is often desirable to control the airflows in two or more separately configured ventilation channels, which are arranged spaced apart from one another, in the same manner by means of air valves, generally in the form of flaps. In the case of air outlets arranged in the foot region of the passenger compartment, one respective channel is provided on both sides of a module housing, wherein for reasons of cost the flow control of both channels is simplified by the two flaps which serve for controlling and/or regulating the airflow being arranged on a common shaft which is able to be adjusted by a single drive.

A generic module is disclosed, for example, in EP 0 525 341 A1.

A drawback with this known flap arrangement is the sealing of both flaps in the closed position which needs improvement, due to combined production tolerances of the housing, the flaps, the shaft and the drive. In particular, the flaps may have an angular offset so that only one flap is sealingly closed. The noise of the airflow as well as the rattling and vibration of the flaps constitute a further problem

Other examples are disclosed in EP04292177, JPH09156348 and WO2016152158 (Art. 54(3) EPC).

As a result, the object of the invention in a module for heating, ventilation and/or air conditioning of the passenger compartment comprising two or more flaps is to improve the closing function of the flaps as well as the sealing thereof in the closed position.

According to the invention, a module with the features of claim 1 is provided. By means of such a spring element, in particular when it is also pretensioned in the closed position, it is possible to compensate for greater tolerances which may be produced as a sum of the production and/or mounting tolerances of all relevant components. In this manner, an improved sealing of both flaps in the closed position is achieved. Moreover, costs and weight may be saved in the choice of adjustment mechanism and/or drive, as the additional torque exerted by the spring acts to assist during the closure of the flaps. This is particularly advantageous as, due to the static and dynamic pressure of the airflow in the channels, the torque required to close the flaps is greater than the torque required to open the flaps.

The module according to the invention for heating, ventilation and/or air conditioning of a passenger compartment of a motor vehicle, therefore, contains a spring element which assists the flaps during closure, whereby the sealing of the flaps when acted upon by air is increased and leakage is reduced. Additionally, all parts of the adjustment mechanism, namely levers, deflectors, actuators, Bowden cables, etc. are assisted by means of the spring element. Temperature-related deformation of the flaps and the leakage associated therewith is reduced.

Preferably, a point of application of the spring element on the shaft is axially spaced apart from a point of application of the drive on the shaft. In the closing direction of the flaps, a high torque has to be exerted on the shaft in order to achieve a sufficient flap contact pressure. Due to the length of the shaft, said shaft consequently has to have a sufficiently high torsional strength. If the spring element which assists the drive in the closing direction has a point of application on the shaft which is axially spaced apart from the point of application of the drive, the shaft may be configured with lower torsional strength, whereby costs and weight may be saved.

According to the invention, the drive is directly or indirectly coupled to a first end of the shaft. This may be implemented in a particularly simple manner in terms of production technology. In this case, "indirect coupling" is to be understood that the drive acts on the shaft, for example, via a lever or the like.

The spring element thus acts on a second end of the shaft which opposes the first end thereof. As a result, when closing the flaps a torque is exerted on the shaft at both ends.

According to another example, which is not part of the invention, the spring element may act between two flaps on the shaft. As just two flaps are present, in particular, the spring element acts on said shaft between the two flaps, i.e. approximately in the centre of the shaft.

The spring element may be a spiral spring or a leaf spring; both are characterized by low production costs.

Preferably, a first end of the spring element is supported on the shaft.

In a preferred embodiment, the first end of the spring element engages in a recess of the shaft. In this case, the spring element may already be premounted on the shaft, whereby the relatively complicated mounting of both ends of the spring element is avoided and/or simplified during the final mounting of the module by simultaneously tensioning the spring element.

Preferably, a second end of the spring element is supported on the module housing, in particular on a projection of the module housing. This results in the option to premount the spring element on the shaft.

Similarly, a second end of the spring element may be positively connected to the module housing. Preferably, therefore, the first end of the spring element is merely supported on the shaft, whereby the mounting of the module is also simplified as the spring element may be premounted on the module housing.

In a particularly preferred embodiment, a separately configured application element for the spring element is provided at one end of the shaft, said application element being latched, in particular, to the shaft. Also, as a result, a simplified mounting is achieved as the spring element may be either premounted on the separate application element or on the module housing.

In particular, the application element is arranged at a second end of the shaft which opposes the first end thereof. In this arrangement, the torsional strength of the shaft may be reduced, wherein the contact force of the flaps is maintained in the closed position.

Alternatively, the application element may naturally be arranged at the first end of the shaft, i.e. at the end coupled to the drive.

In one variant, a first end of the spring element is supported on the application element, in particular is supported on a projection of the application element or engages in a recess of the application element. The second end of the spring element is thus either positively connected to the module housing, preferably when the first end is only supported on the application element, or when the first end engages in a recess of the application element, the spring element is merely supported with the second end on the module housing.

A simple premounting option of the spring element on the shaft is achieved when the spring element at least partially surrounds the shaft or an application element connected to the shaft in the peripheral direction. The second end which cooperates with the module housing is thus preferably only supported on the module housing.

The spring element may be angled back on at least one end thereof and positively mounted with the angled-back end which represents a structurally simple solution.

Further features and advantages are disclosed from the following description of several preferred embodiments with reference to the accompanying drawings, in which:
- figure 1 shows a perspective partial view of a module according to the invention;
- figure 2 shows a perspective view of an adjustment mechanism as is used in the module according to the invention;
- figure 3 shows a schematic sectional view of a module according to the invention which illustrates the mode of operation of the spring element used;
- figure 4a shows a perspective view of a spring element according to a first example of the module, which is not part of the invention;
- figure 4b shows a perspective partial view of the module with the spring element of figure 4a in a closed position of the flaps;
- figure 5a shows a perspective view of a spring element according to a second example of the module, which is not part of the invention;
- figure 5b shows a perspective partial view of the module with the spring element of figure 5a in a closed position of the flaps;
- figure 5c shows a perspective partial view similar to 5b but in an open position of the flaps;
- figure 6a shows a perspective view of a spring element according to a third example of the module, which is not part of the invention;
- figure 6b shows a perspective view of the spring element of figure 6a in engagement with an adjustment mechanism;
- figure 6c shows a perspective partial view of the module with the spring element of figure 6a;
- figure 7a shows a perspective view of a spring element according to an embodiment of the module according to the invention;
- figure 7b shows a perspective partial view of the module with the spring element of figure 7a;
- figure 7c shows a perspective view of an application element which cooperates with the spring element of figure 7a;
- figure 7d shows a further perspective view of the application element of figure 7c;
- figure 8a shows a perspective view of a spring element according to a further embodiment of the module according to the invention;
- figure 8b shows a perspective partial view of the module with the spring element of figure 8a; and
- figure 8c shows a perspective view of a subassembly consisting of the spring element of figure 8a and an application element cooperating therewith.

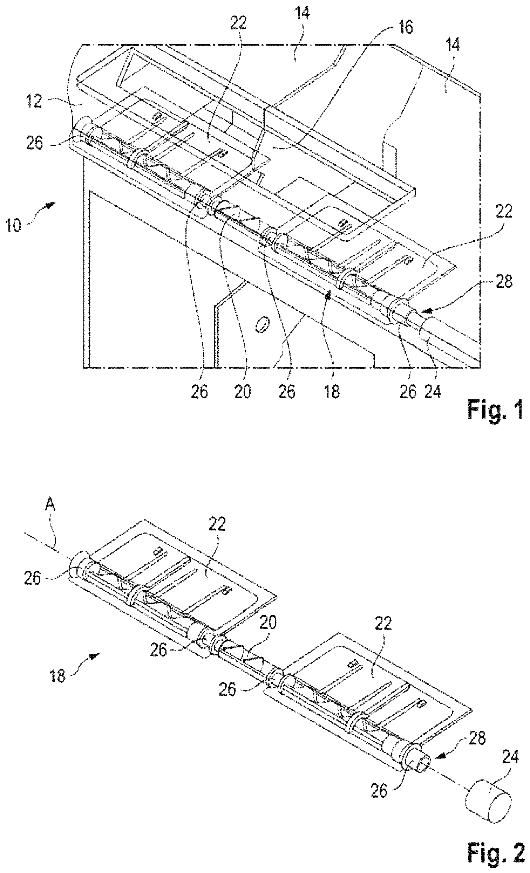

Figure 1 shows in detail a module 10 for heating, ventilation and/or air conditioning of a passenger compartment of a motor vehicle. Said module comprises a module housing 12, two channels 14 being formed therein. The channels 14 are separated from one another approximately in the centre of the module housing 12 by a partition 16 and serve to permit air-conditioned air to flow into a foot area of the passenger compartment.

For controlling and/or regulating the airflow in the channels 14, an adjustment mechanism 18 is provided, said adjustment mechanism being shown separately in figure 2. The adjustment mechanism 18 has a shaft 20, two flaps 22 being arranged thereon, wherein each of the flaps 22 is optionally able to close or open a channel 14 in order to influence the airflow into the passenger compartment.

Moreover, a drive 24 which is merely indicated in figure 2 is provided, said drive adjusting the shaft 20 between a closed position in which each of the flaps 22 closes a channel 14 and a plurality of open positions in which the flaps 22 entirely or partially open the flaps 14. The shaft 20 is mounted in the module housing 12 on a total of four bearing points 26 which in each case are located to the side adjacent to the flaps 22, viewed in the axial direction A. The drive 24 in the embodiment shown is coupled to a first end 28 of the shaft 20, and namely directly or indirectly via levers and/or a corresponding kinematic system.

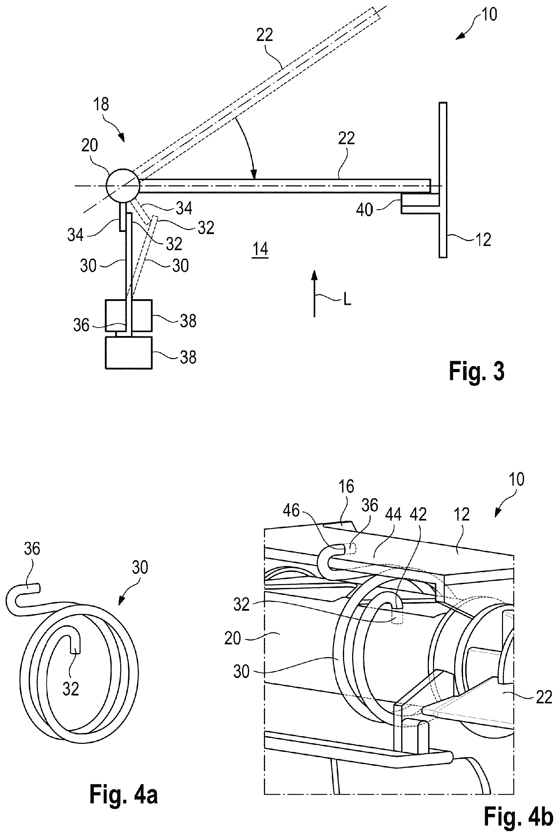

In order to improve the sealing of both flaps 22 in the closed position in the module 10 and, in particular, to compensate for production-related tolerances of the individual components which, for example, may lead to an angular offset of the two flaps 22, a spring element 30 which acts upon the shaft 20 in the closed position is provided. This is shown schematically in figure 3.

The spring element 30 has a first end 32 which is supported on a projection 34 provided on the shaft 20. The opposing second end 36 of the spring element 30 is positively secured to the module housing 12 via retaining elements 38. By the pretensioning of the spring element 30, the flaps 22 are forced in the closed position (illustrated in figure 3 by solid lines) against a seal 40 provided on the respective channel 14, whereby the air tightness of the flaps 22 is reliably ensured, even counter to the static and/or dynamic force of the airflow L.

In the open position which is indicated by dashed-dotted lines, the force exerted by the spring element 30 on the shaft increases, whereby the flaps 22 are acted upon in the closing direction. The spring element 30 acts, therefore, counter to the force of the airflow L and assists the drive 24 in the closing direction.

In this case, the spring element 30 has a point of application on the shaft 20 which is spaced apart in the axial direction A from the point of application of the drive 24 on the shaft 20, namely the first end 28 of the shaft 20. In this manner, the torsion of the shaft 20 is reduced, which is why it is possible to configure the shaft 20 with lower torsional strength in comparison with known modules.

Figures 4a and 4b show a first example of the module 10, which is not part of the invention, wherein the spring element 30 is configured as a spiral spring with two angled-back ends 32, 36. The spring element 30 according to figure 4a is arranged in the region of the partition 16 and thus acts between the two flaps 22 on the shaft 20, by the first end 32 engaging in a recess 42 of the shaft 20. The second end 36 is supported on a projection 44 of the module housing 12, more specifically the end 36 engages in a recess 46 in the projection 44. Both ends 32, 36, therefore, in this embodiment are positively mounted. In this case, the spring element 30 entirely surrounds the shaft in the peripheral direction 20.

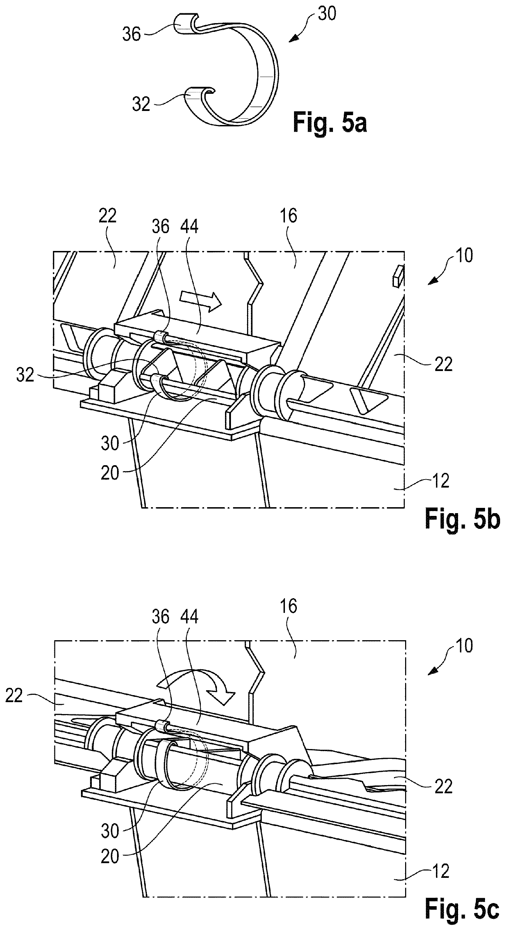

Figures 5a to 5c show a second example of the module with a spring element 30 which is configured as a bent-back leaf spring. Also in this case, both ends 32 and 36 are angled back, wherein the second end 36 is merely supported on the module housing 12, more specifically on the projection 44, but does not engage in a recess.

This simplifies the mounting of the spring element 30. Also the spring element 30 according to figure 5a substantially surrounds the shaft 20 in the peripheral direction and is arranged between the flaps 22 in the region of the partition 16.

Figure 5b shows the closed position of the flaps 22, and in figure 5c the flaps 22 are located in the open position.

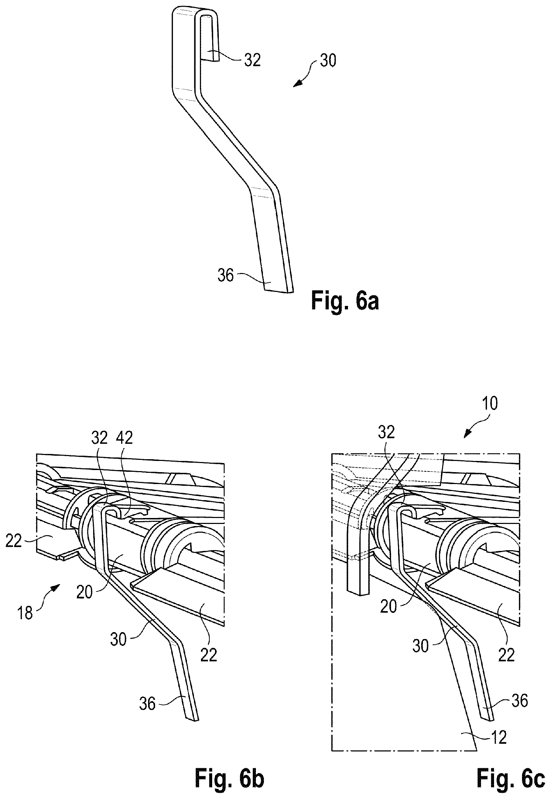

In figures 6a to 6c a third example of the module with a spring element 30 is shown, the spring being an angled-back leaf spring, wherein in this case only the first end 32 of the spring element 30 is bent back, said first end engaging in a recess 42 of the shaft 20. The second end 36 of the spring element 30 is configured to be straight and is merely supported on the module housing 12.

Figure 6b shows the spring element 30 in engagement with the shaft 20, and figure 6c shows the spring element 30 in the installed position in the closed position of the flaps 22.

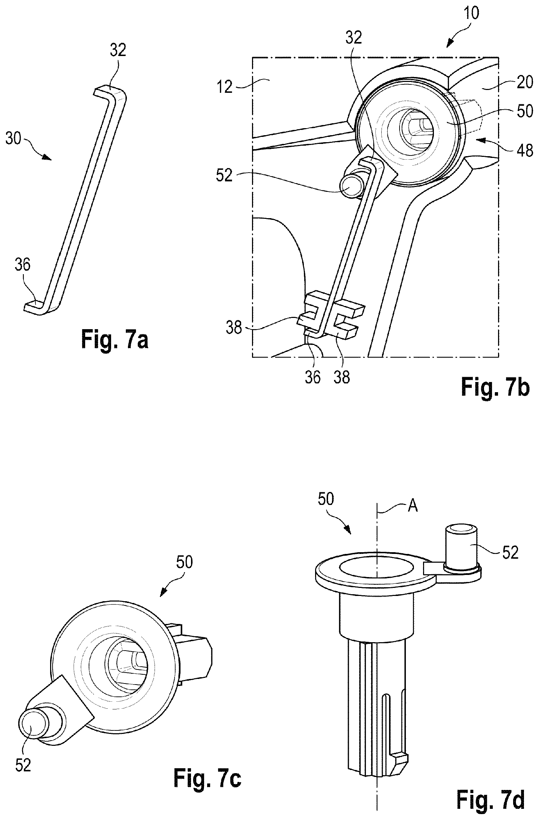

Figures 7a to 7d show an embodiment of the module with a spring element 30 which is configured as an elongated leaf spring with two angled-back ends 32, 36.

In contrast to the examples described above, the spring element 30 according to figure 7a acts on a second end 48 of the shaft 20 which opposes the first end 28 thereof. More specifically, a separately configured application element 50 for the spring element 30 is provided on the second end 48 of the shaft 20, said application element being substantially inserted into the shaft 20 and being latched thereto. Alternatively, the application element 50 could naturally be provided on the first end 28 of the shaft 20, the drive 24 acting thereon.

The application element 50 is shown separately in figures 7c and 7d and has a projection 52 in the form of a pin integrally formed thereon, the first end 32 of the spring element 30 being supported thereon (see figure 7b). The projection 52 is attached radially outwardly on the application element 50 relative to the centre axis A of the application element 50 and, when the shaft 20 is rotated, performs a movement along a circular arc. The second end 36 of the spring element 30 is positively connected to the module housing 12 via retaining elements 38.

Figure 7b shows the module 10 in the closed position of the flaps 22; for opening the flaps 22, the shaft 20 is rotated counterclockwise, whereby the spring element 30 is bent further and pretensioned as the projection 52 forces the first end 32 of the spring element 30 to the right in figure 7b.

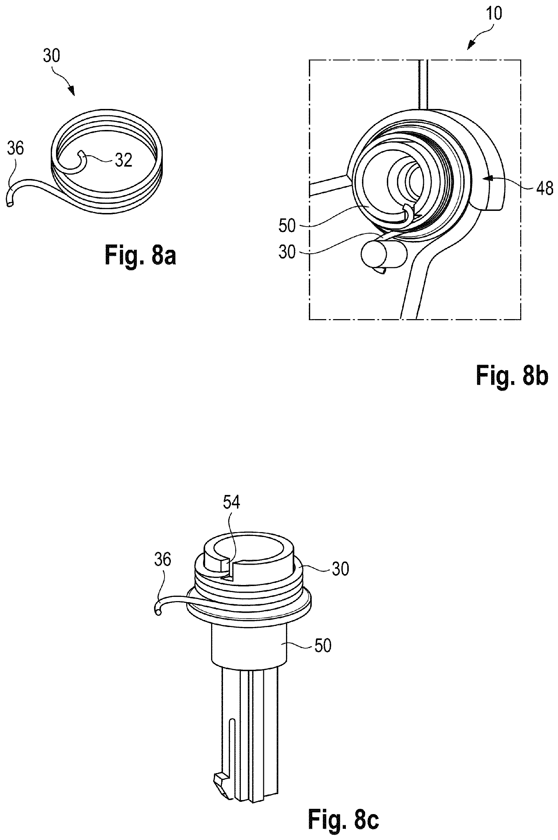

Figures 8a to 8c finally show a further embodiment of the module with a spring element 30 which in turn is configured as spiral spring with two bent-back ends 32, 36. Also in this case an application element 50 is provided on the second end 48 of the shaft 20, wherein in this embodiment the spring element 30 entirely surrounds the application element 50 in the peripheral direction and/or for simpler mounting is directly placed thereon. The first end 32 of the spring element 30 is retained in a recess 54 of the application element 50. The second end 36 of the spring element is supported on a pin-shaped projection 44 on the module housing 12.

In both embodiments of figures 7a to 7d and/or figures 8a to 8c, a simple mounting is provided as the spring element 30 is initially attached positively either to the module housing 12 (figures 7a to 7d) and/or to the application element 50 (figures 8a to 8c) and the respective other end 32 and/or 36 of the spring element 30 is merely supported, which simplifies the final mounting.

It is common to all embodiments that the spring elements 30 used are able to be of very simple and thus cost-effective configuration and are additionally able to be easily mounted.

## Claims

1. Module for heating, ventilation and/or air conditioning of a passenger compartment of a motor vehicle, comprising a module housing (12), at least two channels (14) being formed therein, and an adjustment mechanism (18), in particular for controlling airflows (L) in the channels (14), wherein the adjustment mechanism (18) comprises at least two flaps (22) arranged on a common shaft (20) as well as a drive (24), the shaft (20) being able to be adjusted thereby between a closed position in which each flap (22) closes a channel (14) and at least one open position in which each flap (22) at least partially opens a channel (14), wherein a spring element (30) which acts upon the shaft (20) in the closed position is provided, **characterised in that**, the drive (24) is directly or indirectly coupled to a first end (28) of the shaft (20), and **in that** the spring element (30) acts on a second end (48) of the shaft (20) which opposes the first end (28) thereof.

2. Module according to Claim 1, **characterized in that** a point of application of the spring element (30) on the shaft (20) is axially spaced apart from a point of application of the drive (24) on the shaft (20).

3. Module according to one of the preceding claims, **characterized in that** the spring element (30) is a spiral spring or a leaf spring.

4. Module according to one of the preceding claims, **characterized in that** a first end (32) of the spring element (30) is supported on the shaft (20).

5. Module according to one of the preceding claims, **characterized in that** the first end (32) of the spring element (30) engages in a recess (42) of the shaft (20) .

6. Module according to one of the preceding claims, **characterized in that** a second end (36) of the spring element (30) is supported on the module housing (12), in particular on a projection (44) of the module housing (12).

7. Module according to one of the preceding claims, **characterized in that** a second end (36) of the spring element (30) is positively connected to the module housing (12).

8. Module according to one of the preceding claims, **characterized in that** a separately configured application element (50) is provided at one end (28, 48) of the shaft (20), said application element being latched, in particular, to the shaft (20).

9. Module according to Claims 1 and 8, **characterized in that** the application element (50) is for the spring element (30) and is arranged on a second end (48) of the shaft (20) which opposes the first end (28) thereof.

10. Module according to Claim 9, **characterized in that** a first end (32) of the spring element (30) is supported on the application element (50), in particular is supported on a projection (52) of the application element (50) or engages in a recess (54) of the application element (50).

11. Module according to one of the preceding claims, **characterized in that** the spring element (30) at least partially surrounds the shaft (20) or an application element (50) connected to the shaft (20) in the peripheral direction.

12. Module according to one of the preceding claims, **characterized in that** the spring element (30) is angled back on at least one end (32, 36) thereof and positively mounted with the angled-back end (32, 36).

## Patentansprüche

1. Modul zur Beheizung, Belüftung und/oder Klimatisierung einer Fahrgastzelle eines Kraftfahrzeugs, ein Modulgehäuse (12), in dem wenigstens zwei Kanäle (14) ausgebildet sind, und eine Verstellmechanik (18), insbesondere zur Steuerung von Luftströmen (L) in den Kanälen (14), umfassend, wobei die Verstellmechanik (18) mindestens zwei auf einer gemeinsamen Welle (20) angeordnete Klappen (22) sowie einen Antrieb (24) umfasst, mittels dem die Welle (20) zwischen einer Schließstellung, in der jede Klappe (22) einen Kanal (14) verschließt, und wenigstens einer Öffnungsstellung, in der jede Klappe (22) einen Kanal (14) zumindest teilweise freigibt, verstellbar ist, wobei ein Federelement (30) vorgesehen ist, das die Welle (20) in die Schließstellung beaufschlagt, **dadurch gekennzeichnet, dass** der Antrieb (24) direkt oder indirekt mit einem ersten Ende (28) der Welle (20) gekoppelt ist, und dass das Federelement (30) an einem zweiten Ende (48) der Welle (20) angreift, das dem ersten Ende (28) entgegengesetzt ist.

2. Modul nach Anspruch 1, **dadurch gekennzeichnet, dass** ein Angriffspunkt des Federelements (30) an der Welle (20) von einem Angriffspunkt des Antriebs (24) an der Welle (20) axial beabstandet ist.

3. Modul nach einem der vorstehenden Ansprüche, **dadurch gekennzeichnet, dass** das Federelement (30) eine Spiralfeder oder eine Blattfeder ist.

4. Modul nach einem der vorstehenden Ansprüche, **dadurch gekennzeichnet, dass** ein erstes Ende (32) des Federelements (30) auf der Welle (20) getragen wird.

5. Modul nach einem der vorstehenden Ansprüche, **dadurch gekennzeichnet, dass** das erste Ende (32) des Federelements (30) in eine Ausnehmung (42) der Welle (20) eingreift.

6. Modul nach einem der vorstehenden Ansprüche, **dadurch gekennzeichnet, dass** ein zweites Ende (36) des Federelements (30) auf dem Modulgehäuse (12) getragen wird, insbesondere auf einem Vorsprung (44) des Modulgehäuses (12).

7. Modul nach einem der vorstehenden Ansprüche, **dadurch gekennzeichnet, dass** ein zweites Ende (36) des Federelements (30) formschlüssig mit dem Modulgehäuse (12) verbunden ist.

8. Modul nach einem der vorstehenden Ansprüche, **dadurch gekennzeichnet, dass** an einem Ende (28, 48) der Welle (20) ein separat ausgebildetes Angriffselement (50) vorgesehen ist, wobei das Angriffselement insbesondere mit der Welle (20) verrastet ist.

9. Modul nach den Ansprüchen 1 und 8, **dadurch gekennzeichnet, dass** das Angriffselement (50) für das Federelement (30) bestimmt ist und an einem zweiten Ende (48) der Welle (20), das dem ersten Ende (28) entgegengesetzt ist, angeordnet ist.

10. Modul nach Anspruch 9, **dadurch gekennzeichnet, dass** ein erstes Ende (32) des Federelements (30) auf dem Angriffselement (50) getragen wird, insbesondere auf einem Vorsprung (52) des Angriffselements (50) getragen wird oder in eine Ausnehmung (54) des Angriffselements (50) eingreift.

11. Modul nach einem der vorstehenden Ansprüche, **dadurch gekennzeichnet, dass** das Federelement (30) die Welle (20) oder ein mit der Welle (20) verbundenes Angriffselement (50) in Umfangsrichtung zumindest teilweise umgibt.

12. Modul nach einem der vorstehenden Ansprüche, **dadurch gekennzeichnet, dass** das Federelement (30) an zumindest einem seiner Enden (32, 36) abgewinkelt ist und mit dem abgewinkelten Ende (32, 36) formschlüssig gelagert ist.

## Revendications

1. Module de chauffage, ventilation et/ou climatisation d'un habitacle d'un véhicule automobile, comprenant un boîtier de module (12), au moins deux canaux (14) formés en son sein, et un mécanisme de réglage (18), permettant en particulier de réguler des flux d'air (L) dans les canaux (14), le mécanisme de réglage (18) comprenant au moins deux volets (22) disposés sur un arbre commun (20) ainsi qu'un entraînement (24), l'arbre (20) pouvant ainsi être réglé entre une position fermée dans laquelle chaque volet (22) ferme un canal (14) et au moins une position ouverte dans laquelle chaque volet (22) ouvre au moins partiellement un canal (14), un élément ressort (30) qui agit sur l'arbre (20) dans la position fermée étant fourni, **caractérisé en ce que** l'entraînement (24) est directement ou indirectement accouplé à une première extrémité (28) de l'arbre (20), et **en ce que** l'élément ressort (30) agit sur une seconde extrémité (48) de l'arbre (20) qui est opposée à la première extrémité (28) de celui-ci.

2. Module selon la revendication 1, **caractérisé en ce qu'**un point d'application de l'élément ressort (30) sur l'arbre (20) est axialement espacé d'un point d'application de l'entraînement (24) sur l'arbre (20).

3. Module selon l'une des revendications précédentes, **caractérisé en ce que** l'élément ressort (30) est un ressort spirale ou un ressort à lames.

4. Module selon l'une des revendications précédentes, **caractérisé en ce qu'**une première extrémité (32) de l'élément ressort (30) est supportée sur l'arbre (20).

5. Module selon l'une des revendications précédentes, **caractérisé en ce que** la première extrémité (32) de l'élément ressort (30) vient en prise dans un évidement (42) de l'arbre (20).

6. Module selon l'une des revendications précédentes, **caractérisé en ce qu'**une seconde extrémité (36) de l'élément ressort (30) est supportée sur le boîtier de module (12), en particulier sur une saillie (44) du boîtier de module (12).

7. Module selon l'une des revendications précédentes, **caractérisé en ce qu'**une seconde extrémité (36) de l'élément ressort (30) est reliée de manière positive au boîtier de module (12).

8. Module selon l'une des revendications précédentes, **caractérisé en ce qu'**un élément d'application (50) conçu séparément est disposé au niveau d'une extrémité (28, 48) de l'arbre (20), ledit élément d'application étant verrouillé, en particulier, à l'arbre (20).

9. Module selon les revendications 1 et 8, **caractérisé en ce que** l'élément d'application (50) est destiné à l'élément ressort (30) et est disposé sur une seconde extrémité (48) de l'arbre (20) qui est opposée à la première extrémité (28) de celui-ci.

10. Module selon la revendication 9, **caractérisé en ce qu'**une première extrémité (32) de l'élément ressort (30) est supportée sur l'élément d'application (50), en particulier est supportée sur une saillie (52) de l'élément d'application (50) ou vient en prise dans un évidement (54) de l'élément d'application (50).

11. Module selon l'une des revendications précédentes, **caractérisé en ce que** l'élément ressort (30) entoure au moins partiellement l'arbre (20) ou un élément d'application (50) relié à l'arbre (20) dans la direction périphérique.

12. Module selon l'une des revendications précédentes, **caractérisé en ce que** l'élément ressort (30) est coudé vers l'arrière au niveau d'au moins une de ses extrémités (32, 36) et monté de manière positive avec l'extrémité coudée vers l'arrière (32, 36).
